(19) Europäisches Patentamt
European Patent Office
Office européen des brevets

(11) **EP 1 671 160 B1**

(12) **EUROPÄISCHE PATENTSCHRIFT**

(45) Veröffentlichungstag und Bekanntmachung des Hinweises auf die Patenterteilung:
**02.05.2007  Patentblatt 2007/18**

(21) Anmeldenummer: **04790170.7**

(22) Anmeldetag: **07.10.2004**

(51) Int Cl.:
***G01V 8/20*** *(2006.01)*

(86) Internationale Anmeldenummer:
**PCT/EP2004/011197**

(87) Internationale Veröffentlichungsnummer:
**WO 2005/036209 (21.04.2005 Gazette 2005/16)**

(54) **VERFAHREN ZUR BESTIMMUNG UND/ODER AUSWERTUNG EINES DIFFERENTIELLEN OPTISCHEN SIGNALS**

METHOD FOR DETERMINING AND/OR EVALUATING A DIFFERENTIAL OPTICAL SIGNAL

PROCEDE POUR DETERMINER ET/OU EVALUER UN SIGNAL OPTIQUE DIFFERENTIEL

(84) Benannte Vertragsstaaten:
**AT BE BG CH CY CZ DE DK EE ES FI FR GB GR HU IE IT LI LU MC NL PL PT RO SE SI SK TR**

(30) Priorität: **08.10.2003  DE 10346741**

(43) Veröffentlichungstag der Anmeldung:
**21.06.2006  Patentblatt 2006/25**

(73) Patentinhaber: **Mechaless Systems GmbH
76131 Karlsruhe (DE)**

(72) Erfinder:
• **REIME, Gerd
77815 Bühl (DE)**

• **DOMOKOS, Michael
75057 Kuernbach (DE)**
• **LANGER, Peter
76227 Durlach/Karlsruhe (DE)**
• **SPIEGEL, Egbert
45891 Gelsenkirchen (DE)**

(74) Vertreter: **Reinhardt, Harry et al
Reinhardt & Pohlmann Partnerschaft,
Grünstrasse 1
75172 Pforzheim (DE)**

(56) Entgegenhaltungen:
DE-A- 4 004 530  DE-A- 10 106 998
DE-A- 10 318 764  DE-B- 10 300 223

EP 1 671 160 B1

**Beschreibung**

Die Erfindung betrifft ein Verfahren zur Bestimmung und/oder Auswertung eines differentiellen optischen Signals nach dem Oberbegriff des Anspruches 1.

Photodioden weisen für moduliertes Licht eine von der absoluten Helligkeit abhängige Sensitivität auf, den sogenannten "ambient light effect". Somit hängt das Empfangssignal einer Reflexionslichtschranke nicht nur vom zu messenden Reflexionsgrad, sondern auch vom Umgebungslicht ab. Damit ist die Auswertung des Empfangssignals bei stark schwankenden Umgebungslichtverhältnissen nicht mehr zuverlässig möglich.

Aus der dem Oberbegriff der Ansprüche 1 und 4 zu Grunde liegenden EP 706 648 B1 ist ein Messverfahren bekannt, bei dem die Übertragungsfunktion der Photodiode eliminiert wird. Hierzu senden wenigstens zwei Lichtquellen abwechselnd auf wenigstens einen Empfänger, wobei diese so geregelt werden, dass sie aus Sicht des Empfängers stets gleich hell leuchten. Das Empfangssignal der Photodiode dient somit lediglich dem Vergleich von zwei zeitnah empfangenen Signalen. Senden die beiden Lichtquellen ein gegenphasiges Rechtecksignal, so ergibt sich im ausgeregelten Kreis ein Empfangssignal von Null. D.h. die Verstärkung des Empfängers kann beliebig hoch gewählt werden, da das bandpassgefilterte Empfangssignal nur bewertet wird. Ist die eine Lichtquelle zu stark, so entspricht das Empfangssignal ihrem Takt und umgekehrt. Eine nachfolgende Schaltung erkennt dies und regelt die Intensität der Lichtquellen entsprechend nach.

Grundlegend existieren für eine derartige Regelung mit z.B. zwei Lichtquellen zwei unterschiedliche Regelverfahren:

1. Eine Lichtquelle sendet stets mit konstantem Pegel, die andere Lichtquelle wird nachgeregelt. Dies ist insbesondere dann sinnvoll, wenn eine Lichtquelle zum Messobjekt leuchtet, während die andere direkt in den Empfänger einstrahlt.
2. Beide Lichtquellen werden stets so geregelt, dass ihre Summenintensität gleich bleibt. Dies ist sinnvoll, wenn beide Lichtquellen das Messobjekt beleuchten.

Die beiden Regelverfahren können auch kombiniert werden. Allerdings muss sichergestellt sein, dass die Regelbedingung nicht durch Ausschalten von beiden Lichtquellen erfüllt wird. In den zur Erläuterung herangezogenen folgenden Formeln haben die Formelzeichen folgende Bedeutung:

| Formelzeichen | Bedeutung |
| --- | --- |
| $I_1$ | Steuergröße von Sender 1 |
| $I_2$ | Steuergröße von Sender 2 |
| Im | Maximalwert der Steuergröße |
| k | Konversionsfaktor zwischen Steuergröße und Strahlungsfluss der Lichtquelle |
| $\Phi_1$ | Ausgesandter Strahlungsfluss von Lichtquelle 1 |
| $\Phi_2$ | Ausgesandter Strahlungsfluss von Lichtquelle 2 |
| $D_1$ | Dämpfungsfaktor für den Lichtweg von Lichtquelle 1 zum Empfänger |
| $D_2$ | Dämpfungsfaktor für den Lichtweg von Lichtquelle 2 zum Empfänger |
| $f_e$ | Monotone Übertragungsfunktion des Empfängers |

Es wird vorrausgesetzt, dass die Konversionsfunktion der Lichtquelle zwischen Steuergröße und Strahlungsfluss für die folgenden Gleichungen linear ist.

$$\Phi_1 = k \cdot I_1 \quad (1.1)$$

$$\Phi_2 = k \cdot I_2 \quad (1.2)$$

Die Regelbedingung lautet:

$$f_e\left(\Phi_1 \cdot D_1\right) = f_e\left(\Phi_2 \cdot D_2\right) \qquad (1.3)$$

unter Benutzung von Gleichung 1.1 und 1.2 ergibt sich:

$$I_1 \cdot D_1 = I_2 \cdot D_2 \qquad (1.4)$$

Für das Regelprinzip 1 führt die folgende Zusatzbedingung ein:

$$I_1 = I_m \qquad (1.5)$$

Damit ist $I_2$ Ausgangssignal und ergibt sich zu:

$$I_2 = \frac{I_m \cdot D_1}{D_2} \qquad (1.6)$$

Bei Anwendung des Regelprinzips 2 gilt die Zusatzbedingung:

$$I_1 + I_2 = I_m$$

Daraus folgt für beispielsweise $I_2$:

$$I_2 = \frac{I_m \cdot D_1}{D_1 + D_2} \qquad (1.7)$$

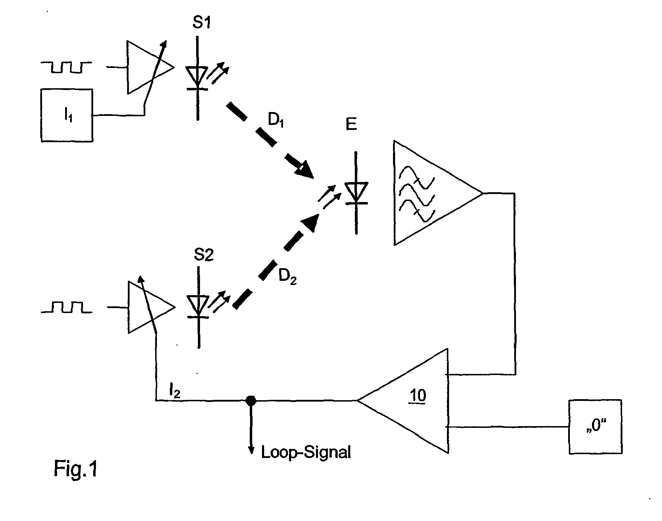

In Fig. 1 ist das Regelverfahren 1 als Blockschaltbild wiedergegeben. Zwei erste Lichtquellen S1, S2, hier LEDs, senden rechteckförmig moduliertes Licht im Gegentakt zum Empfänger E. Eine Sendeamplitude ist regelbar. Der Empfänger mit Bandpasscharakteristik verstärkt das Empfangssignal und führt es einem Regler 10 zu. Dieser Regler, in PI-Ausführung, stellt nun die Amplitude der regelbaren ersten Lichtquelle S1 so nach, dass das Wechselsignal am Empfängerausgang null wird. Der Regler 10 bewertet hierzu das Empfangssignal synchron zum Sendertakt, um so die Regelrichtung zu detektieren. Der Regler 10 zerfällt in zwei Teile: einer Detektion, welcher Sender stärker ist, und einem Integrator zur Erzeugung der Stellgröße.

Bis jetzt werden zur Realisierung des Detektors im Wesentlichen die folgenden Verfahren angewandt:

- Das Empfangssignal wird in jeder Halbperiode abgetastet und die Differenz der beiden Abtastwerte bezüglich des Vorzeichens bewertet.
- Das Empfangssignal wird synchron demoduliert und das Vorzeichen des Demodulationsproduktes zur Steuerung des Integrators verwendet.

Die Integration erfolgt bei der bisher analogen Realisierung durch eine klassische Integratorschaltung, bei einer digitalen Realisierung ist der Integrator ein vom Takt gesteuerter Zähler, dessen Zählrichtung durch das ermittelte Vorzeichen gesteuert wird.

Da die bisherige digitale Implementierung eine direkte Umsetzung des analogen Regelkreises darstellt, werden nicht die Vorteile eines rein digitalen Systems genutzt. Insbesondere treten in der Vorzeichenerkennung Analogspannungen auf, die sehr empfindlich verglichen werden müssen, ohne ein Schwingen des Systems zu verursachen. Hierzu wird meist eine Hysterese verwendet, die die Systemempfindlichkeit herabsetzt.

Aus der DE 101 06 998 A! ist ein Verfahren zur Auswertung eines differentiellen, optischen Signals bekannt, welches sequentiell getaktet und phasenverschoben von zwei Lichtquellen ausgesandt wird. Eine Fremdlichtkompensation erfolgt durch Referenzmessungen bei ausgeschalteten Sendern oder durch Empfangssignalanalyse während der Sendepausen. Die Empfangssignale werden amplitudenmäßig ausgewertet, eine rückkoppelnde Steuerung basierend auf der Auswertung der Phasenlage der Signale erfolgt nicht.

Ausgehend von diesem Stand der Technik liegt der vorliegenden Erfindung die Aufgabe zu Grunde, eine vereinfachte digitale Implementierung dieses Verfahrens möglichst ohne Verlust der Empfindlichkeit zu schaffen.

Diese Aufgabe wird durch ein Verfahren mit den Merkmalen des Anspruches 1 gelöst.

Diese Lösung beruht auf der Beobachtung, dass zur Beurteilung, welcher Sender stärker sendet, es ausreichend ist, das Empfangssignal bezüglich der Phasenlage zu beurteilen. Eine zusätzliche Betrachtung der Amplitude ist grundsätzlich nicht erforderlich. Aufgrund dieser Erkenntnis lassen sich digitale Ausgestaltungen schnell und günstig realisieren, ohne dass es zu Fehlsignalen kommt. Dabei besteht sowohl die Möglichkeit, die so gewonnene Regelgröße als Licht über einen der Sender oder eine weitere Lichtquelle als Kompensationslichtquelle wieder in die Regelstrecke einzubringen, alternativ kann aber auch das so gewonnene Signal als Stromsignal am Empfänger hinzuaddiert werden. Die zweite Alternative berücksichtigt zwar nicht sämtliche Störeinflüsse, die sich aufgrund der verwendeten Bauteile ergeben können, unter Umständen genügt jedoch eine derartige Lösung insbesondere für günstigere Ausführungsformen, bei denen es eventuell nicht auf eine vollständige Positions- oder Annäherungserkennung ankommt.

Vorzugsweise erfolgt die Kompensation über die Lichtquellen selbst. Auch hier besteht die Möglichkeit den als Regelgröße ermittelten Strom entsprechend skaliert dem Strom der entsprechend schwächeren Lichtquelle hinzuzuaddieren. Das Umschalten der Phasenlage ist dann gleichbedeutend mit dem Umschalten dieses zusätzlichen Stromes von der einen LED auf die andere. Weitere Vorteile ergeben sich aus den Unteransprüchen und der nachfolgenden Beschreibung.

Im Folgenden wird die Erfindung anhand der beigefügten Figuren näher erläutert. Es zeigen:

Fig. 1        Ein Blockschaltbild eines Verfahrens zur Ermittlung eines fremdlichtunabhängigen optischen Signals nach dem Stand der Technik,

Fig. 2        Signalverläufe in einem Regelkreis gemäß Fig. 1,

Fig. 3, 4    verschiedene Ausführungsformen für einen Empfänger,

Fig. 5, 6    Lockschaltbilder für eine digitale Steuerung eines derartigen Verfahrens,

Fig. 7        ein Blockschaltbild für eine Regelung mit einer gesonderten Kompensationslichtquelle.

Die Figuren zeigen ein Verfahren zur Bestimmung und/oder Auswertung eines differenziellen optischen Signals mit wenigstens zwei ersten Lichtquellen S1, S2, die Licht zeitsequenziell getaktet, phasenweise aussenden. Zum Empfang des so ausgesandten Signals ist wenigstens ein Empfänger E vorgesehen, der den von den ersten Lichtquellen S1, S2 stammenden taktsynchronen Wechsellichtanteil empfängt. Die in der Messanordnung durch wenigstens eine Lichtquelle S1, S2, die auch eine Kompensationslichtquelle K sein kann, eingestrahlte Lichtintensität wird dann so geregelt, dass der taktsynchrone Wechsellichtanteil, der zwischen den verschiedenen Phasen auftritt, am Empfänger E zu Null wird. Dies wurde eingangs in der Beschreibungseinleitung näher erläutert.

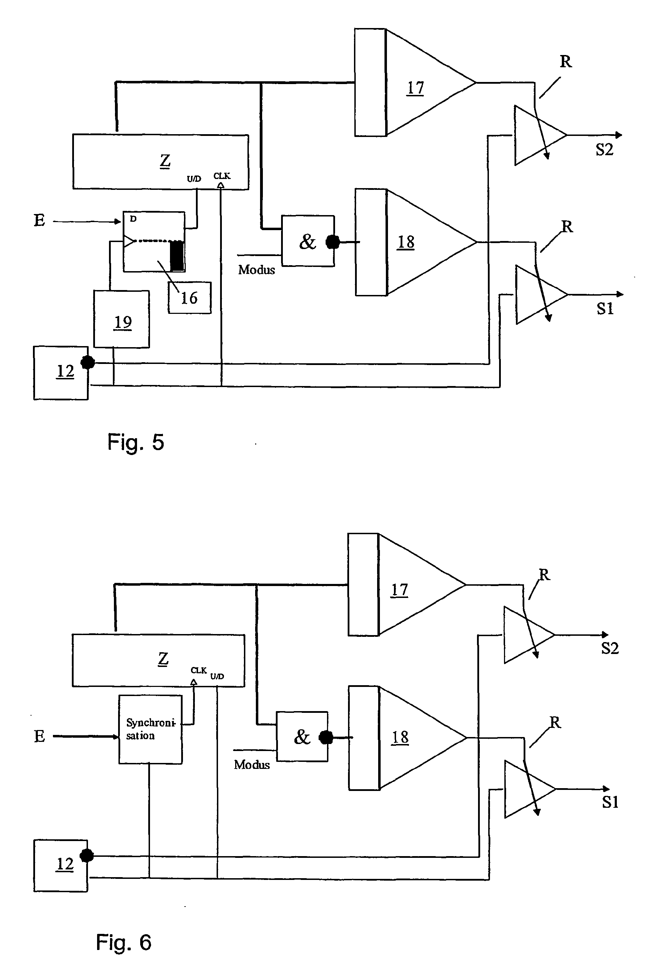

Hiervon ausgehend wird im Folgenden nun allgemein das verfolgte Prinzip erläutert, bevor dann auf die genaueren Implementierungen gemäß den Figuren 5 bis 7 eingegangen wird.

Zur Regelung der eingestrahlten Lichtintensität wird nicht mehr das Empfangssignal wie bei einer analogen Auswertung hinsichtlich seiner Amplitude beurteilt und bewertet, sondern stattdessen wird das Empfangssignal am Empfänger E bezüglich der Phasenlage bestimmt und damit eine Stellgröße erzeugt. Diese Stellgröße R kann entweder als Lichtsignal durch einen entsprechenden Strom an wenigstens eine der ersten Lichtquellen S1, S2 übermittelt werden, es ist jedoch ebenso möglich, das Ganze durch ein Stromsignal dem Empfänger durch Stromaddition zuzuleiten. Die weitere Lichtquelle, die die Lichtintensität regelt kann insofern eine der ersten Lichtquellen S1, S2 sein. Alternativ kann es aber auch eine weitere Lichtquelle K sein, die dem Empfänger zugeordnet ist, wobei durch diese weitere Lichtquelle K die Regelung so erfolgt, dass sie ihre Phase wechselt, indem diese weitere Lichtquelle K über wenigstens ein ExOr-Gatter 21 oder wenigstens ein ExNor-Gatter angesteuert wird.

Zur Erzeugung der Stellgröße R wird der ganzzahlige Wert der Phasenlage, also z.B. +1 oder-1 entsprechend 0° oder 180° mittels eines Zählers Z integriert. Das digitalisierte Empfangssignal wird als Richtungssignal für den Empfänger E verwendet. Das Empfangssignal wird einem Flip-Flop 11 zugeführt, wobei der Takt des Flip-Flops so aus dem Sendetakt abgeleitet wird, dass als Steuersignal für die Zählrichtung des Zählers Z das Signal der einen der ersten Lichtquellen S1 phasenrichtig und das Signal der anderen der ersten Lichtquellen S2 invertiert wiedergegeben wird (Fig. 5). Alternativ kann auch das digitalisierte Empfangssignal als Taktsignal für den Zähler Z verwendet werden, während die Zählrichtung durch den Takt eines den Takt der ersten Lichtquelle S1, S2 bestimmenden Taktgebers 12 vorgegeben wird (Fig. 6). Das Empfangssignal weist gegenüber dem Takt des Taktgebers 12 in letzterem Fall eine Phasenverschiebung von vorzugsweise 90° auf. Vorzugsweise wird das Empfangssignal als Zählertakt im Zeitbereich der Flanke des Takts zwischengespeichert.

Um ein schnelleres Hochfahren des Zählers Z zu erreichen, kann der Zählerstand des Zählers Z bedarfsweise vorgegeben sein oder ist ggf. softwaremäßig vorgebbar. Um die Auflösung des Reglers möglichst vollständig auszunutzen, kann ergänzend die Stellgröße R einen vorgegebenen oder vorgebbaren, festen Anteil aufweisen. Dies ist insbesondere dann der Fall, wenn im konkreten Anwendungsfall stets nur ein bestimmter Regelbereich benutzt wird. Für den dann verbleibenden Regelbereich, der durch den variablen Anteil der Stellgröße bestimmt wird, ergibt sich damit eine erheblich gesteigerte Auflösung. Dieser variable Anteil der Stellgröße wird zu dem festen Anteil durch Stromaddition z. B. an der Lichtquelle S1, S2, K addiert. Ergänzend kann die Stellgröße R durch Stromaddition zu der oder den schwächeren Lichtquellen S1, S2, K taktweise hinzuaddiert werden.

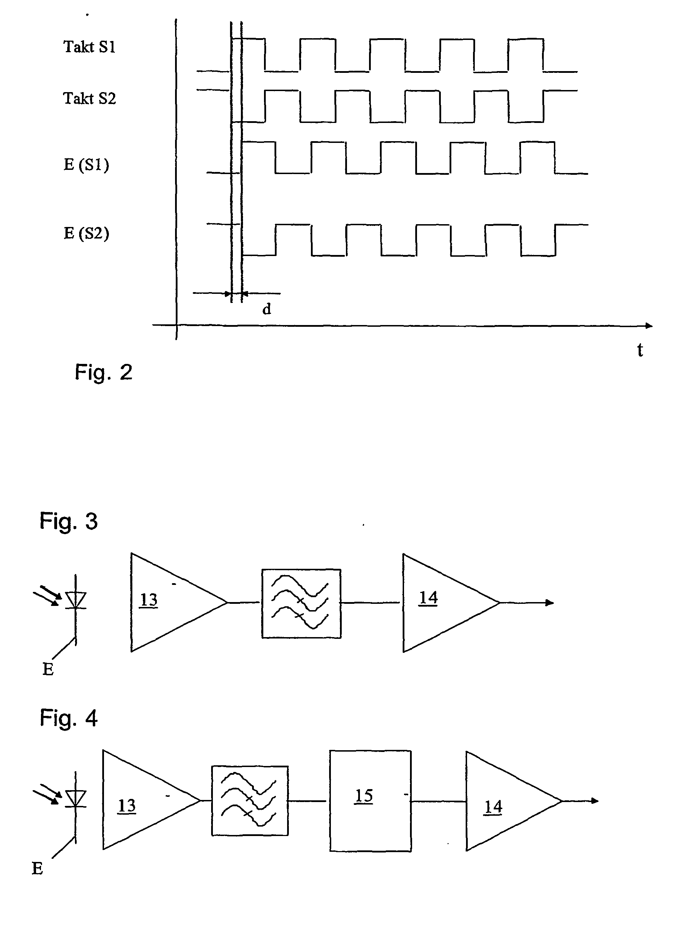

Unter Bezug auf die Figuren wird nun die Erfindung an Ausführungsbeispielen noch näher erläutert. Gemäß Fig. 2 entspricht das Empfängersignal dem Takt von Sender S1 oder von Sender S2. Zusätzlich liegt eine zusätzliche Phasenverschiebung d vor, die durch die Übertragungsfunktion der LED-Treiber, dem Empfänger und zu einem geringen Anteil von der Lichtlaufzeit verursacht wird. In Fig. 2 sind die Signalverläufe dargestellt. Von oben nach unten sind die Sendesignale des Senders S1 und des Senders S2 sowie dann die zugehörigen Empfangssignale E(S1) und E(S2) dargestellt, bei denen entweder Sender S1 oder S2 je nach Phase überwiegt.

Beiden im Folgenden vorgestellten Implementierungen ist gemeinsam, dass das Empfangssignal bis zur Begrenzung verstärkt wird, sodass ein Rechtecksignal vorliegt. Dieses Rechtecksignal kann gemäß Fig. 3 mittels eines Komparators 14 aus dem hochpassgefilterten Empfangssignal gewonnen werden, oder gemäß Fig. 4 durch eine erste begrenzende Verstärkung mittels eines Transimpedanzverstärkers 13 und eines Amplitudenbegrenzers 15, die in einer nachfolgenden Stufe auf den benötigten digitalen Pegel umgesetzt wird. Diese zweite Realisierung hat den Vorteil, dass die Sättigungseffekte bei Verstärkern bzw. die unterschiedlichen Schaltzeiten für die steigende und fallende Flanke bei Komparatoren vermieden werden.

Die Implementierung kann gemäß Fig. 5 so erfolgen, dass das digitalisierte Empfangssignal der Datenleitung eines D-Flip-Flops 16 zugeführt wird. Der Takt für das Flip-Flop wird - bedarfsweise mittels Verzögerungsschaltung 19 verzögert - so aus dem Sendetakt des Taktgebers 12 abgeleitet, dass beispielsweise das Taktsignal von Sender S1 phasenrichtig und das von Sender S2 invertiert reproduziert wird. Diese so gespeicherten Werte dienen als Steuersignal für die Zählrichtung des Zählers Z. Der Zählerstand wird mittels eines DA-Umsetzers 17, 18 in die Sendeamplitude von beispielsweise Sender S2 umgesetzt. Gemäß den beiden eingangs genannten Regelmöglichkeiten wird bei Bedarf die Sendeleistung von Sender S1 mit dem invertierten Zählerstand oder dem invertierten DA-Umsetzer-Ergebnis angesteuert. Im ausgeregelten Zustand schwankt der Zähler Z stets um einen Zählschritt periodisch auf und ab im vorgegeben Takt. Der Empfänger E steuert damit die Richtung des Zählers Z. Merkmale dieser Implementierung sind:

- Ein Zählschritt je Periode
- Der Empfänger E muss lediglich die Phase regenerieren
- Der Empfänger E kann mit extrem hoher Verstärkung ausgelegt werden
- Ein Takt synchroner Betrieb des Zählers Z
- Eine Schaltung zur Erzeugung eines Abtastimpulses

Bei der alternativen Implementierung gemäß Fig. 6 weist das digitalisierte Empfangssignal gegenüber dem Takt eine Phasenverschiebung von typischerweise 90° auf. Dies kann beispielsweise durch einen Bandpass im Empfänger E erreicht werden. Dieses Empfangssignal dient als Takt für den Zähler Z, während die Zählrichtung durch den Takt vorgegeben ist. Zur Vermeidung von unerlaubten Flankenüberschneidungen wird das als Zählertakt dienende Empfangssignal kurz vor und nach jeder Flanke des als Zählrichtung dienenden Taktes zwischengespeichert. Im Übrigen werden die DA-Umsetzer 17, 18 wie in Fig. 5 verwendet. Merkmale dieser Implementierung sind:

- Ein Zählschritt je Periode, bei Richtungswechsel je Halbperiode
- Der Empfänger muss lediglich Phase regenerieren, Phasenverschiebung ist notwendig
- Der Empfänger kann mit extrem hoher Verstärkung ausgelegt werden
- Ein asynchroner Takt des Zählers
- Eine Schaltung zur Verriegelung des Empfangssignals bei Flankenwechsel des Taktes ist notwendig

Wie bei der Implementierung gemäß Fig. 5 wird der Zählerstand auf die Sendertreiber umgesetzt.

Aus der älteren deutschen Patentanmeldung 103 00 223.5 ist ein Verfahren zur phasenkorrekten Kompensation eines differentiellen optischen Signals bekannt. Wesentlich ist hier, dass der einzige geregelte Sender, meist eine weitere Lichtquelle K als Kompensator, seine Phase wechseln muss. Soweit dies für diese Erfindung von Bedeutung ist, wird im Folgenden der Inhalt jener Anmeldung erläutert. Prinzipiell wird dann, wenn eine Lichtquelle Licht aussendet, in einer Photodiode, die dieses Licht z.B. nach Reflexion von einem Gegenstand erhält, ein taktsynchrones elektrisches Signal erzeugt. Sendet also z.B. die Leuchtdiode Licht mit einer Taktfrequenz von 40 KHz aus, wird die Photodiode ein entsprechendes Signal mit der gleichen Frequenz und nahezu gleicher Phase erzeugen. Betrachtet man nun bei zwei getaktet betriebenen Leuchtdioden den hier relevanten Wechsellichtanteil bezüglich der Sendephase von 0°, so kann dieser Wechsellichtanteil positiv und negativ sein, d.h. eine Phase von 0° oder 180° aufweisen, da eine Leuchtdiode bei einer Phase von 0° und die andere bei einer Phase von 180° abstrahlt. Dabei wird 0° mit positivem Vorzeichen identifiziert und 180° mit negativem Vorzeichen. Wird nun eine weitere Lichtquelle K zugeschaltet, die unabhängig von den das Licht aussendenden Lichtquellen arbeitet, kann diese Licht in Amplitude und Vorzeichen phasenversetzt einstrahlen. Mit anderen Worten kann also die weitere Lichtquelle K durch zusätzliche Lichteinstrahlung die Kompensation im Wesentlichen oder sogar alleine übernehmen. Dadurch wird über die Lichtleistung der weiteren Lichtquelle K das taktsynchrone Empfangssignal in seiner Amplitude auch bei komplexen Messanordnungen mit Positions-, Richtungs- und Entfernungsdetektion so beeinflusst, dass das Empfangssignal zu Null wird.

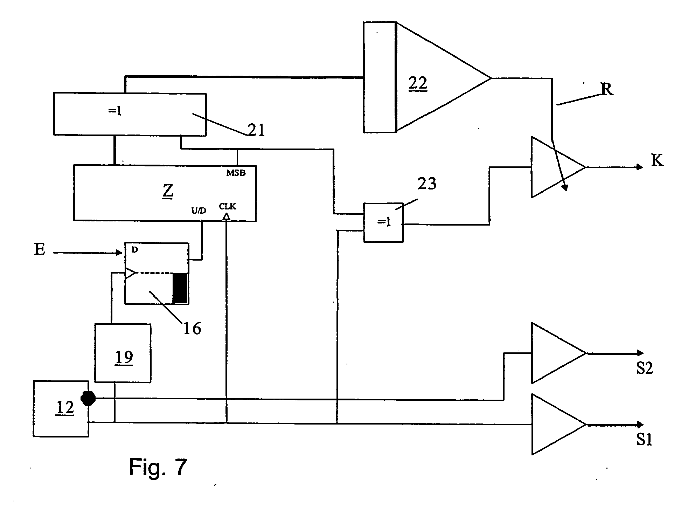

Dies wird nach der vorliegenden Erfindung gemäß Fig. 7 dadurch erreicht, dass der Zählerstand nicht direkt, sondern über ExOr-Gatter 21 oder ggf. ein ExNor-Gatter an den DA-Umsetzer 22 gegeben wird. Ein ExOr-Gatter 21 mit zwei Eingängen kann als steuerbarer Inverter aufgefasst werden. Liegt an einem Eingang (Steuereingang) logisch Nullpegel an, so folgt der Ausgang des Gatters dem zweiten Eingang (Dateneingang). Liegt hingegen am Steuereingang eine logische 1 an, so entspricht der Ausgang des Gatters dem inversen Dateneingang. An jedem Ausgang des Zählers Z ist nun ein solches Gatter angeschlossen und alle Steuereingänge sind mit dem invertierten most significant Bit (MSB) des Zählers verbunden. Somit ergibt sich an den Gatterausgängen gegenüber dem Zählerstand der in Fig. 7 gezeigte funktionale Zusammenhang. Ebenfalls wirkt das MSB als Steuersignal auf ein ExOr-Gatter 23, durch welches der Takt zum Modulator 24 der Lichtquelle K als Kompensations-LED geleitet wird. Im Ausführungsbeispiel der Fig. 7 werden die Sender S1 und S2 nicht geregelt.

Der Zähler Z kann überlaufen. Dies führt dazu, dass, wenn der Regelkreis sich aufgrund ungünstiger optischer Dämpfungsverhältnisse nicht ausregeln kann, der Regelkreis schwingt, so dass der Zähler Z permanent zählt und die Intensität von einer oder beiden LEDs sich zyklisch ändert. Um dies zu verhindern, wird der Überlauf durch eine geeignete Beschaltung verhindert. Hierzu erfolgt bei Erreichen des maximalen bzw. minimalen Zählerstandes eine Verriegelung des Zählers Z für die jeweilige Zählrichtung. Die Implementierung dieser Verriegelung erfolgt beispielsweise über eine Kopplung des Übertragungsausgangs auf den ENABLE-Eingang des Zählers Z. Die genaue Ausführung ist von der gewählten Zählerrealisierung abhängig.

Der Zählerstand ändert sich bei den aufgeführten Implementierungen je Takt um einen Schritt. Durch eine geeignete Logik, welche erkennt, dass die letzten Zählschritte in die gleiche Richtung gingen, kann auch ein größerer Zählschritt ausgelöst werden. Dies entspricht einem D-Anteil im Regler.

Um ein Einschwingen des Reglers zu beschleunigen kann der Zähler Z auch eine Möglichkeit besitzen, ihn auf einen vorgegeben Zählerstand zu setzen.

Bewegt sich die Änderung der optischen Übertragung nur in einem engen Bereich, so besteht die Möglichkeit diesen Bereich heraus zu vergrößern. Hierzu wird die Stellgröße aus zwei Teilen gebildet, nämlich einer festen Einstellung in Form eines Offsets und einem variablen Anteil, der vom Regler kontrolliert wird. Im Falle einer Kompensation, wie sie in der oben erläuterten, älteren deutschen Patentanmeldung 103 00 223.5 vorgeschlagen wurde, bietet es sich somit an, die eigentliche Kompensations-LED einzusparen und den geregelten Anteil additiv durch Stromaddition dem jeweils phasenrichtigen Sender hinzuzufügen.

Bezugszeichenliste

| | |
|---|---|
| 10 | Regler |
| 11 | Flip-Flop |
| 12 | Taktgeber |
| 13 | Transimpendanzverstärker |
| 14 | Komparator |
| 15 | Amplitudenbegrenzer |
| 16 | Flip-Flop |
| 17, 18, 22 | Digitalanalogumsetzer |
| 19 | Verzögerungsschaltung |
| 21, 23 | ExOr-Gatter |

| 24 | Modulator |
| d | Phasenverschiebung |
| E | Empfänger |
| E (S1), E (S2) | Empfangssignale von S1, S2 |
| K | weitere Lichtquelle |
| R | Stellgröße |
| S1, S2 | Erste Lichtquelle |
| Z | Zähler |

**Patentansprüche**

1. Verfahren zur Bestimmung und/oder Auswertung eines differentiellen, optischen Signals mit wenigstens zwei ersten Lichtquellen (S1, S2), die Licht zeitsequenziell getaktet, phasenweise aussenden, und mit wenigstens einem Empfänger (E) zum Empfang zumindest des von den ersten Lichtquellen (S1, S2) stammenden taktsynchronen Wechsellichtanteils, wobei die in die Messanordnung durch wenigstens eine Lichtquelle (S1, S2, K) eingestrahlte Lichtintensität so geregelt wird, dass der taktsynchrone Wechsellichtanteil, der zwischen verschiedenen Phasen auftritt, am Empfänger (E) zu Null wird,
**dadurch gekennzeichnet, dass** zur Regelung der eingestrahlten Lichtintensität das Empfangssignal am Empfänger (E) bezüglich der Phasenlage bestimmt wird und damit die Stellgröße (R) zur Regelung der eingestrahlten Lichtintensität erzeugt wird.

2. Verfahren nach Anspruch 1, **dadurch gekennzeichnet, dass**, damit der taktsynchrone Wechsellichtanteil, der zwischen verschiedenen Phasen auftritt, am Empfänger (E) zu Null wird, eine weitere Lichtquelle (K) oder eine der ersten Lichtquellen (S1, S2) als weitere Lichtquelle verwendet wird.

3. Verfahren nach Anspruch 2, **dadurch gekennzeichnet, dass** die weitere Lichtquelle (K), die dem Empfänger zugeordnet ist, durch die Regelung so geregelt wird, dass sie ihre Phase wechselt, indem diese weitere Lichtquelle (K) über wenigstens ein ExOr-Gatter (21) oder wenigstens ein ExNor-Gatter angesteuert wird.

4. Verfahren nach einem der vorhergehenden Ansprüche, **dadurch gekennzeichnet, dass** die Stellgröße (R) durch Stromaddition dem Stromsignal des Empfängers (E) hinzuaddiert wird.

5. Verfahren nach einem der vorhergehenden Ansprüche, **dadurch gekennzeichnet, dass** zur Erzeugung der Stellgröße (R) der Wert der Phasenlage mittels eines Zählers (Z) integriert wird und der Zählerstand des Zählers (Z) bedarfsweise vorgegeben oder vorgebbar ist.

6. Verfahren nach Anspruch 5, **dadurch gekennzeichnet, dass** der Wert der Phasenlage bei 0° oder 180° bewertet wird.

7. Verfahren nach Anspruch 5 oder 6, **dadurch gekennzeichnet, dass** das digitalisierte Empfangssignal als Richtungssignal für den Empfänger verwendet wird.

8. Verfahren nach Anspruch 7, **dadurch gekennzeichnet, dass** das Empfangssignal einem Flip-Flop (11) zugeführt wird, wobei der Takt des Flip-Flops so aus dem Sendetakt abgeleitet wird, dass als Steuersignal für die Zählrichtung des Zählers (Z) das Signal der einen der ersten Lichtquellen (S1) phasenrichtig und das Signal der anderen der ersten Lichtquellen (S2) invertiert wiedergegeben wird.

9. Verfahren nach einem der Ansprüche 1 bis 6, **dadurch gekennzeichnet, dass** das digitalisierte Empfangssignal als Taktsignal für den Zähler (Z) verwendet wird, während die Zählrichtung durch den Takt eines den Takt der ersten Lichtquellen (S1, S2) bestimmenden Taktgebers (12) vorgegeben wird.

10. Verfahren nach Anspruch 9, **dadurch gekennzeichnet, dass** das Empfangssignal gegenüber dem Takt des Taktgebers (12) eine Phasenverschiebung von vorzugsweise 90° aufweist und/oder als Zählertakt im Zeitbereich der Flanke des Takts zwischengespeichert wird.

11. Verfahren nach einem der vorhergehenden Ansprüche, **dadurch gekennzeichnet, dass** die Stellgröße (R) einen vorgegebenen oder vorgebbaren, festen Anteil aufweist.

**12.** Verfahren nach Anspruch 11, soweit es auf einen der Ansprüche 1-3 und 5-10 rückbezogen ist, **dadurch gekennzeichnet, dass** ein variabler Anteil der Stellgröße (R) zu dem festen Anteil durch Stromaddition an der Lichtquelle (S1, S2, K) addiert wird.

**13.** Verfahren nach einem der Ansprüche 1-3, 5-12, **dadurch gekennzeichnet, dass** die Stellgröße (R) durch Stromaddition zu der oder den schwächeren Lichtquellen (S1, S2, K) taktweise hinzuaddiert wird.

**Claims**

**1.** Method for determining and/or evaluating a differential, optical signal with at least two first light sources (S1, S2) which emit light in a time-sequentially clocked, phased manner, and with at least one receiver (E) for receiving at least the clock-synchronous alternating light component coming from the first light sources (S1, S2), wherein the light intensity which is irradiated into the measuring arrangement by at least one light source (S1, S2, K) is regulated such that the clock-synchronous alternating light component, which occurs between different phases, becomes zero at the receiver (E),
**characterised in that**, in order to regulate the irradiated light intensity, the incoming signal at the receiver (E) is determined in terms of phase position and the correcting variable (R) for regulating the irradiated light intensity is thus produced.

**2.** Method according to Claim 1, **characterised in that**, in order that the clock-synchronous alternating light component, which occurs between the different phases, becomes zero at the receiver (E), an additional light source (K) or one of the first light sources (S1, S2) as an additional light source is used.

**3.** Method according to Claim 2, **characterised in that** the additional light source (K), which is associated with the receiver, is regulated by the regulation such that it changes its phase as a result of this additional light source (K) being controlled by means of at least one EXOR gate (21) or at least one EXNOR gate.

**4.** Method according to any one of the preceding Claims, **characterised in that** the correcting variable (R) is added to the current signal of the receiver (E) through current addition.

**5.** Method according to any one of the preceding Claims, **characterised in that** the value of the phase position is integrated by means of a counter (Z) in order to produce the correcting variable (R) and **in that** the counter reading of the counter (Z) is, if required, predetermined or predeterminable.

**6.** Method according to Claim 5, **characterised in that** the value of the phase position is evaluated at 0° or 180°.

**7.** Method according to Claim 5 or 6, **characterised in that** the digitized incoming signal is used as a directional signal for the receiver.

**8.** Method according to Claim 7, **characterised in that** the incoming signal is fed to a flipflop (11), wherein the clock of the flipflop is derived from the transmitting clock such that the signal of one of the first light sources (S1) is reproduced in-phase and the signal of the other of the first light sources (S2) is reproduced inverted as the control signal for the counting direction of the counter (Z).

**9.** Method according to any one of Claims 1-6, **characterised in that** the digitized incoming signal is used as a clock signal for the counter (Z), while the counting direction is predetermined by the clock of a clock generator (12) which determines the clock of the first light sources (S1, S2).

**10.** Method according to Claim 9, **characterised in that** the incoming signal has a phase displacement of preferably 90° with respect to the clock of the clock generator (12) and/or is temporarily stored as a counter clock in the time range of the edge of the clock pulse.

**11.** Method according to any one of the preceding Claims, **characterised in that** the correcting variable (R) comprises a predetermined or predeterminable, fixed component.

**12.** Method according to Claim 11, in so far as it relates to any one of Claims 1-3 and 5-12, **characterised in that** a variable component of the correcting variable (R) is added to the fixed component through current addition at the light source (S1, S2, K).

**13.** Method according to any one of Claims 1-3, 5-12, **characterised in that** the correcting variable (R) is added to the weaker light source(s) (S1, S2, K) in a clocked fashion.

**Revendications**

**1.** Procédé pour déterminer et/ou évaluer un signal optique différentiel avec au moins deux premières sources de lumière (S1, S2) qui émettent de la lumière en phase et de manière séquentielle, et avec au moins un récepteur (E) pour la réception d'au moins la composante de lumière alternative synchrone provenant des premières sources de lumière (S1, S2), l'intensité lumineuse introduite dans le dispositif de mesure par au moins une source de lumière (S1, S2, K) étant régulée de manière que la composante de lumière alternative synchrone, qui se manifeste entre différentes phases, s'annule sur le récepteur (E),
**caractérisé**
**en ce que** pour la régulation de l'intensité lumineuse irradiée, le signal de réception sur le récepteur (E) est déterminé par rapport à la relation des phases et de ce fait la grandeur de réglage (R) pour la régulation de l'intensité lumineuse irradiée est générée.

**2.** Procédé selon la revendication 1, **caractérisé en ce qu'**une source de lumière (K) complémentaire ou l'une des premières sources de lumière (S1, S2) est utilisée comme source de lumière complémentaire afin que la composante de lumière alternative synchrone, qui se manifeste entre différentes phases, s'annule sur le récepteur (E).

**3.** Procédé selon la revendication 2, **caractérisé en ce que** la source de lumière (K) complémentaire, qui est associée au récepteur, est régulée par la régulation de manière que sa phase varie **en ce que** cette source de lumière (K) complémentaire est commandée à travers au moins une porte ExOr (21) ou au moins une porte ExNor.

**4.** Procédé selon l'une des revendications précédentes, **caractérisé en ce que** la grandeur de réglage (R) est additionnée, par addition de courant, au signal de courant du récepteur (E).

**5.** Procédé selon l'une des revendications précédentes, **caractérisé en ce que** pour produire la grandeur de réglage (R), la valeur de la relation des phases est intégrée au moyen d'un compteur (Z) et la position du compteur (Z) est ou peut être prédéfinie suivant les besoins.

**6.** Procédé selon la revendication 5, **caractérisé en ce que** la valeur de la relation des phases est évaluée à 0° ou à 100°.

**7.** Procédé selon la revendication 5 ou 6, **caractérisé en ce que** le signal de réception numérisé est utilisé comme signal de direction pour le récepteur.

**8.** Procédé selon la revendication 7, **caractérisé en ce que** le signal de réception est envoyé à un flip-flop (11), le rythme du flip-flop étant dérivé du rythme d'émission de manière que, comme signal de commande pour le sens de comptage du compteur (Z), le signal de l'une des premières sources de lumière (S1) soit retransmis en phase et le signal de l'autre des premières sources de lumière (S2) soit reproduit inversé.

**9.** Procédé selon l'une des revendications 1 à 6, **caractérisé en ce que** le signal de réception numérisé est utilisé comme signal de rythme pour le compteur (Z), tandis que le sens de comptage est prédéfini par le rythme d'un générateur de rythme (12) déterminant le rythme des premières sources de lumière (S1, S2).

**10.** Procédé selon la revendication 9, **caractérisé en ce que** le signal de réception présente, par rapport au rythme du générateur de rythme (12), un déphasage de 90° de préférence et/ou est mémorisé de manière intermédiaire en tant que rythme du compteur pendant l'intervalle de temps du flanc du rythme.

**11.** Procédé selon l'une des revendications précédentes, **caractérisé en ce que** la grandeur de réglage (R) présente une composante fixe prédéfinie ou à prédéfinir.

**12.** Procédé selon la revendication 11, dans la mesure où elle se réfère à l'une des revendications 1 à 3 et 5 à 10, **caractérisé en ce qu'**une composante variable de la grandeur de réglage (R) est additionnée à la composante fixe par addition de courant sur la source de lumière (S1, S2, K).

**13.** Procédé selon l'une des revendications 1 à 3, 5 à 12, **caractérisé en ce que** la grandeur de réglage (R) est additionnée de manière rythmée par addition de courant à la ou aux sources de lumière (S1, S2, K) plus faibles.

S1

$I_1$

$D_1$

E

S2

$D_2$

$I_2$

Loop-Signal

10

„0"

Fig.1

Takt S1

Takt S2

E (S1)

E (S2)

d

t

Fig. 2

Fig. 3

E

13

14

Fig. 4

E

13

15

14

Fig. 5

Fig. 6

Fig. 7